# EUROPEAN PATENT APPLICATION

(11) **EP 3 331 247 A1**
(43) Date of publication of application: **06.06.2018**
(21) Application number: 16832278.2
(22) Date of filing: 29.07.2016
(51) Int. Cl.: H04N 21/436

(54) **MULTI-SCREEN CONTROL METHOD AND DEVICE**

(30) Priority: 31.07.2015 CN 201510466473
(71) Applicant: ZTE Corporation, Shenzhen, Guangdong 518057 (CN)
(72) Inventor: JI, Jian, Shenzhen Guangdong 518057 (CN); PAN, Daohua, Shenzhen Guangdong 518057 (CN); GUO, Jialou, Shenzhen Guangdong 518057 (CN)
(74) Representative: Studio Torta S.p.A.
(86) International application number: PCT/CN2016/092401
(87) International publication number: WO 2017/020790

(57) **Abstract**

Provided are a multi-screen control method and device. The method comprises: a server receiving a first access request message sent by a terminal, and receiving a second access request message sent by a set top box; the server determining a network platform to which the terminal belongs according to the first access request message, and determining a network platform to which the set top box belongs according to the second access request message; and the server sending an internet protocol (IP) address corresponding to the network platform to which the terminal belongs to the terminal according to the network platform to which the terminal belongs, and sending an IP address corresponding to the network platform to which the set top box belongs to a proxy server corresponding to the set top box according to the network platform to which the set top box belongs. By means of the present invention, the problem in the related art that multi-screen message interaction cannot be performed normally is solved, thereby guaranteeing network intercommunications between a terminal, a set top box and a server, and implementing normal multi-screen interaction.

## Description

### TECHNICAL FIELD

The embodiments of the present disclosure relate to the field of communications, and in particular, to a method and device for multi-screen control.

### BACKGROUND

With the application of various multi-screen terminals in an Interactive Personality TV (IPTV) system, the multi-screen interactive service has gradually become a new type of service popular with home users. This requires the IPTV system to provide users with services that are seamlessly switched between terminals such as set top box (STB), PC, mobile phone, PAD, etc. However, when different terminals belong to different network platforms (such as broadband networks and mobile networks), the message communication between terminals needs a multi-screen gateway for proxy forwarding. Currently, two network platforms, optical transmission technology (OTT) and IPTV, are common. The IP addresses of the two network platforms cannot be used commonly with each other, a server has different addresses on the OTT and IPTV network platform, a terminal and a set top box in the OTT and IPTV network platforms need a server IP address consistent with their network platform for normal communication, whereby in a distributed system, only when the problem of how to enable a terminal and a set top box on different network platforms to get a correct server IP address is solved, normal multi-screen message interaction can be ensured.

In the related art, no effective solution has been provided for solving the problem that multi-screen message interaction cannot be normally performed.

### SUMMARY

The embodiments of the present disclosure provide a method and device for multi-screen control, so as to at least solve the problem in the related art that multi-screen message interaction cannot be normally performed.

According to an embodiment of the present disclosure, there is provided a method for multi-screen control, comprising: a server receiving a first access request message sent by a terminal and a second access request message sent by a set top box; the server determining, according to the first access request message, a network platform to which the terminal belongs, and determining, according to the second access request message, a network platform to which the set top box belongs; and the server sending to the terminal, according to the network platform to which the terminal belongs, an internet protocol (IP) address corresponding to the network platform to which the terminal belongs, the server sending to a proxy server corresponding to the set top box, according to the network platform to which the set top box belongs, an IP address corresponding to the network platform to which the set top box belongs.

Alternatively, the server determining, according to the first access request message, a network platform to which the terminal belongs, and determining, according to the second access request message, a network platform to which the set top box belongs, comprises: the server acquiring the IP address of the terminal itself; determining a first IP address segment of the IP address of the terminal itself, wherein the first IP address segment is an IP address segment that is pre-configured by the server for the terminal; according to the correlation between the pre-configured first IP address segment and a network platform, determining a network platform to which the terminal belongs; or the server acquiring the IP address of the set top box itself; and determining a second IP address segment of the IP address of the set top box itself, wherein the second IP address segment is an IP address segment pre-configured by the server for the set top box; and according to the correlation between the pre-configured second IP address segment and a network platform, determining a network platform to which the set top box belongs.

Alternatively, the server determining a network platform to which the terminal belongs according to the first access request message and determining a network platform to which the set top box belongs according to the second access request message comprises: the server determining a network platform to which the terminal belongs according to the port receiving the first access request message; or the server determining a network platform to which the set top box belongs according to the port receiving the second access request message.

Alternatively, the network platform is at least one of: an optical transmission technology (OTT) network platform and an interactive personality TV (IPTV) network platform.

According to another embodiment of the present disclosure, there is provided a method for multi-screen control, comprising: a terminal sending a first access request message to a server; the terminal receiving, from the server, an internet protocol (IP) address corresponding to a network platform to which the terminal belongs, wherein the network platform is determined by the server according to the first access request message.

Alternatively, the method further comprises: the terminal receiving the IP address of a proxy server corresponding to a set top box, wherein the IP address of the proxy server is an IP address corresponding to a designated network platform, and the designated network platform is a network platform to which the terminal and the proxy server belong together.

According to still another embodiment of the present disclosure, there is provided a method for multi-screen control, comprising: a set top box sending a second access request message to a server; the set top box receiving, from the server, an IP address corresponding to a network platform to which the set top box belongs, wherein the network platform is determined by the server according to the second access request message.

Alternatively, the method further comprises: the set top box sending the IP address of a proxy server corresponding to the set top box to a terminal, wherein the IP address of the proxy server is an IP address corresponding to a designated network platform, and the designated network platform is a network platform to which the terminal and the proxy server belong together.

According to still another embodiment of the present disclosure, there is provided a device for multi-screen control, comprising: a receiving module, configured to receive a first access request message sent by a terminal and receive a second access request message sent by a set top box; a determining module, configured to determine, according to the first access request message, a network platform to which the terminal belongs, and determine, according to the second access request message, a network platform to which the set top box belongs; and a sending module, configured to send to the terminal, according to the network platform to which the terminal belongs, an internet protocol (IP) address corresponding to the network platform to which the terminal belongs, and send to the proxy server corresponding to the set top box, according to a network platform to which the set top box belongs, an IP address corresponding to the network platform to which the set top box belongs.

Alternatively, the determining module comprises: a first acquisition unit, configured to acquire the IP address of the terminal itself; a first determining unit, configured to determine a first IP address segment of the IP address of the terminal itself, wherein the first IP address segment is an IP address segment pre-configured by the server for the terminal; a second determining unit, configured to determine, according to the correlation between the pre-configured first IP address segment and a network platform, a network platform to which the terminal belongs; or a second acquisition unit, configured to acquire the IP address of the set top box itself; a third determining unit, configured to determine a second IP address segment of the IP address of the set top box itself, wherein the second IP address segment is an IP address segment pre-configured by the server for the set top box; and a fourth determining unit, configured to determine, according to the correlation between the pre-configured second IP address segment and a network platform, a network platform to which the set top box belongs.

Alternatively, the determining module comprises: a fifth determining unit, configured to determine, according to a port receiving the first access request message, a network platform to which the terminal belongs; or a sixth determining unit, configured to determine, according to a port receiving the second access request message, a network platform to which the set top box belongs.

Alternatively, the network platform is at least one of: an optical transmission technology (OTT) network platform and an interactive personality IPTV network platform.

According to still another embodiment of the present disclosure, there is provided a device for multi-screen control comprising: a first sending module, configured to send a first access request message to a server; a first receiving module, configured to receive, from the server, an internet protocol (IP) address corresponding to the network platform to which the terminal belongs, wherein the network platform is acquired by the server according to the first access request message.

Alternatively, the device further comprises: a second receiving module, configured to receive the IP address of a proxy server corresponding to a set top box, wherein the IP address of the proxy server is an IP address corresponding to a designated network platform, and the designated network platform is a network platform to which the terminal and the proxy server belong together.

According to still another embodiment of the present disclosure, there is provided a device for multi-screen control, comprising: a second sending module, configured to send a second access request message to a server; a third receiving module, configured to receive, from the server, an IP address corresponding to a network platform to which the set top box belongs, wherein the network platform is determined by the server according to the second access request message.

Alternatively, the device further comprises: a third sending module, configured to send the IP address of a proxy server corresponding to the set top box to a terminal, wherein the IP address of the proxy server is an IP address corresponding to a designated network platform, and the designated network platform is a network platform to which the terminal and the proxy server belong together.

With the embodiments of the present disclosure, the server receives the first access request message sent by the terminal and the second access request message sent by the set top box; the server determines, according to the first access request message, the network platform to which the terminal belongs, and determines, according to the second access request message, the network platform to which the set top box belongs; the server sends, according to the network platform to which the terminal belongs, the internet protocol (IP) address corresponding to the network platform to which the terminal belongs, and sends, according to the network platform to which the set top box belongs, to the proxy server corresponding to the set top box, the IP address corresponding to the network platform to which the set top box belongs, thereby solving the problem in the related art that multi-screen message interaction cannot be normally conducted, ensuring the network intercommunications between the terminal, the set top box and the server, and achieving normal multi-screen interaction.

### BRIEF DESCRIPTION OF THE DRAWINGS

The accompanying drawings used herein are used to provide a further understanding of the present disclosure and form a part of the present application. The schematic embodiments of the present disclosure and the description thereof are used to explain the present disclosure, and do not constitute improper limitations to the present disclosure. In the drawings:
Fig. 1 is a flowchart of a method for multi-screen control according to an embodiment of the present disclosure;
Fig. 2 is a flowchart (I) of a method for multi-screen control according to an embodiment of the present disclosure;
Fig. 3 is a flowchart (II) of a method for multi-screen control according to an embodiment of the present disclosure;
Fig. 4 is a structural block diagram of a device for multi-screen control according to an embodiment of the present disclosure;
Fig. 5 is a structural block diagram (I) of a device for multi-screen control according to an embodiment of the present disclosure;
Fig. 6 is a structural block diagram (II) of a device for multi-screen control according to an embodiment of the present disclosure.
Fig. 7 is a structural block diagram (III) of a device for multi-screen control according to an embodiment of the present disclosure;
Fig. 8 is a structural block diagram (IV) of a device for multi-screen control according to an embodiment of the present disclosure;
Fig. 9 is a structural block diagram (V) of a device for multi-screen control according to an embodiment of the present disclosure;
Fig. 10 is a structural block diagram (VI) of a device for multi-screen control according to an embodiment of the present disclosure;
Fig. 11 is a general architecture diagram of a distributed multi-screen gateway according to an embodiment of the present disclosure;
Fig. 12 is a flowchart of interaction between a terminal and a set top box on different network platforms according to an embodiment of the present disclosure.

### DETAILED DESCRIPTION

Hereinafter, the embodiments of the present disclosure will be described in detail in conjunction with the accompanying drawings. It should be noted that, in the case of no conflict, the embodiments in the present application and the features in the embodiments may be combined with each other.

It should be noted that the terms "first", "second" and the like in the description and claims of the present disclosure as well as the drawings are used to distinguish similar objects, and are not necessarily used to describe a specific sequence or a chronological sequence.

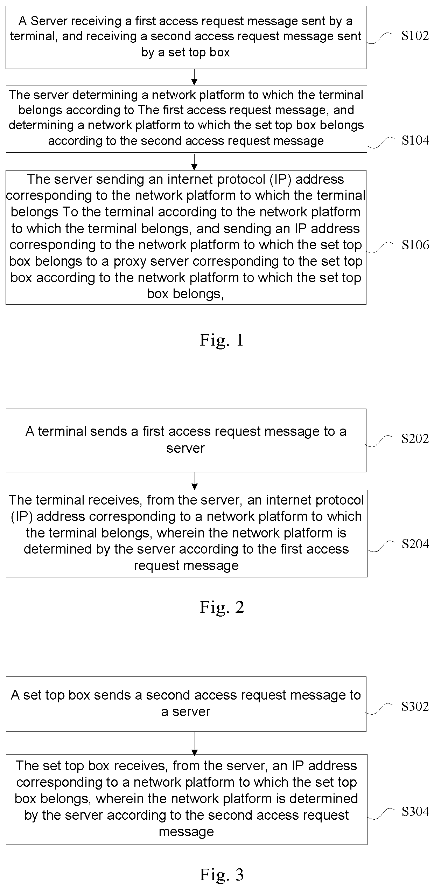

In this embodiment, there is provided a method for multi-screen control. Fig. 1 is a flowchart of a method for multi-screen control according to an embodiment of the present disclosure. As shown in Fig. 1, the process comprises the following steps:
Step S102: The server receives the first access request message sent by the terminal and the second access request message sent by the set top box.
Step S104: The server determines, according to the first access request message, the network platform to which the terminal belongs, and determines, according to the second access request message, the network platform to which the set top box belongs.
Step S106: The server sends, according to the network platform to which the terminal belongs, an internet protocol (IP) address corresponding to the network platform to which the terminal belongs, and sends to the proxy server corresponding to the set top box, according to the network platform to which the set top box belongs, the IP address corresponding to the network platform to which the set top box belongs.

Through the abovementioned steps, the network platform to which the terminal or the set top box belongs is determined, the internet protocol (IP) address corresponding to the network platform to which the terminal belongs is sent to the terminal, and the IP address corresponding to the network platform to which the set top box belongs is sent to the proxy server corresponding to the set top box, so that the terminal and the set top box can acquire the server addresses consistent with the network platforms thereof, solving the problem in the related art that multi-screen message interaction cannot be normally conducted, ensuring the network intercommunications between the terminal, the set top box and the server, and achieving normal multi-screen interaction.

The abovementioned step S104 involves that the server determines, according to the first access request message, the network platform to which the terminal belongs, and determines, according to the second access request message, the network platform to which the set top box belongs. In an alternative embodiment, the server acquires the IP address of the terminal itself, and determines a first IP address segment of the IP address of the terminal itself, wherein the first IP address segment is an IP address segment pre-configured by the server for the terminal, and determines, according to the correlation between the pre-configured first IP address segment and a network platform, the network platform to which the terminal belongs. In another alternative embodiment, the server acquires the IP address of the set top box itself and determines a second IP address segment of the IP address of the set top box itself, wherein the second IP address segment is the IP Address segment pre-configured by the server for the set top box, and a network platform to which the set top box belongs is determined according to the correlation between the pre-configured second IP address segment and the network platform.

In an alternative embodiment, the abovementioned step S104 may also be implemented in the following manner: the server determines, according to the port receiving the first access request message, the network platform to which the terminal belongs; or, the server determines, according to the port receiving the second access request message, the network platform to which the set top box belongs.

In an alternative embodiment, the foregoing network platform is at least one of: an optical transmission technology (OTT) network platform and an interactive personality IPTV network platform.

Fig. 2 is a flowchart (I) of a method for multi-screen control according to an embodiment of the present disclosure. As shown in Fig. 2, the process comprises the following steps:
Step S202: The terminal sends a first access request message to the server.
Step S204: The terminal receives, from the server, an internet protocol (IP) address corresponding to the network platform to which the terminal belongs, wherein the network platform is determined by the server according to the first access request message.

Through the abovementioned steps, the terminal receives from the server the internet protocol (IP) address corresponding to the network platform to which the terminal belongs, so that the terminal and the set top box can acquire the server addresses consistent with the network platforms thereof, solving the problem in the related art that multi-screen message interaction cannot be normally conducted, ensuring the network intercommunications between the terminal, the set top box and the server, and achieving normal multi-screen interaction.

In an alternative embodiment, the terminal receives the IP address of the proxy server corresponding to the set top box, wherein the IP address of the proxy server is an IP address corresponding to a designated network platform, and the designated network platform is a network platform to which the terminal and the proxy server belong together.

Fig. 3 is a flowchart (I) of a method for multi-screen control according to an embodiment of the present disclosure. As shown in Fig. 3, the process comprises the following steps:
Step S302: The set top box sends a second access request message to the server.
Step S304: The set top box receives, from the server, the IP address corresponding to the network platform to which the set top box belongs, wherein the network platform is determined by the server according to the second access request message.

Through the abovementioned steps, the set top box receives, from the server, the IP address corresponding to the network platform to which the set top box belongs, so that the terminal and the set top box can acquire the server addresses consistent with the network platforms thereof, solving the problem in the related art that multi-screen message interaction cannot be normally conducted, ensuring the network intercommunications between the terminal, the set top box and the server, and achieving normal multi-screen interaction.

In an alternative embodiment, the set top box sends the IP address of the proxy server corresponding to the set top box to the terminal, wherein the IP address of the proxy server is an IP address corresponding to a designated network platform, and the designated network platform is the network platform to which the terminal and the proxy server belongs together. Through the above description of the embodiments, those skilled in the art can clearly understand that the method according to the above embodiments may be implemented by means of software plus a necessary universal hardware platform, and certainly may also be implemented by hardware. However, in many cases, the former is a better implementation. Based on this understanding, the technical solution of the embodiments of the present disclosure essentially or the part contributing to the prior art may be embodied in the form of a software product stored in a storage medium (such as an ROM/RAM, a magnetic disc, an optical disc), which comprises several instructions to enable a terminal device (which may be a mobile phone, a computer, a server, or a network device, etc.) to execute the method according to each embodiment of the present disclosure.

In this embodiment, there is further provided a device for multi-screen control, which is configured to implement the foregoing embodiments and preferred embodiments, and the details that have been described will not be repeated again. As used below, the term "module" may be a combination of software and/or hardware that achieves a predetermined function. Although the devices described in the following embodiments are preferably implemented in software, the implementation of hardware or a combination of software and hardware is also possible and contemplated.

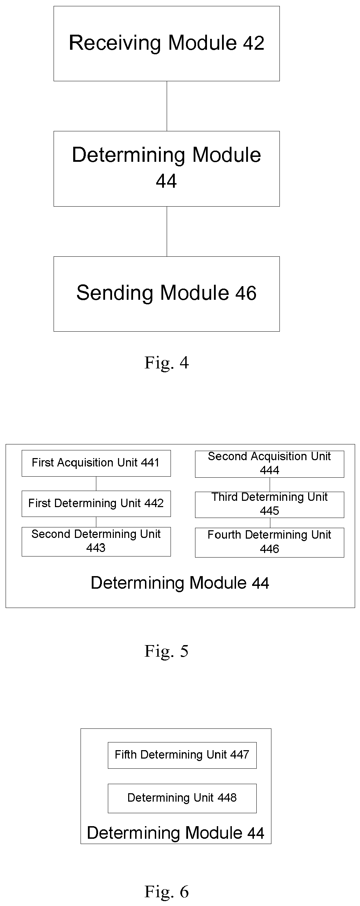

Fig. 4 is a structural block diagram of a device for multi-screen control according to an embodiment of the present disclosure. As shown in Fig. 4, the device comprises: a receiving module 42 configured to receive a first access request message sent by a terminal and receive a second access request message sent by a set top box; a determining module 44 configured to determine, according to the first access request message, a network platform to which the terminal belongs, and determine, according to the second access request message, a network platform to which the set top box belongs; and a sending module 46 configured to send to the terminal, according to the network platform to which the terminal belongs, an internet protocol (IP) address corresponding to the network platform to which the terminal belongs, and send to the proxy server corresponding to the set top box, according to a network platform to which the set top box belongs, an IP address corresponding to the network platform to which the set top box belongs.

Fig. 5 is a structural block diagram (I) of a device for multi-screen control according to an embodiment of the present disclosure. As shown in Fig. 5, the device relates to a determining module 44 in Fig. 4. The determining module 44 further comprises: a first acquisition unit 441 configured to acquire the IP address of the terminal itself; a first determining unit 442, configured to determine a first IP address segment of the IP address of the terminal itself, wherein the first IP address segment is an IP address segment pre-configured by the server for the terminal; a second determining unit 443, configured to determine, according to the correlation between the pre-configured first IP address segment and a network platform, a network platform to which the terminal belongs; or a second acquisition unit 444, configured to acquire the IP address of the set top box itself; a third determining unit 445, configured to determine a second IP address segment of the IP address of the set top box itself, wherein the second IP address segment is an IP address segment pre-configured by the server for the set top box; and a fourth determining unit 446, configured to determine, according to the correlation between the pre-configured second IP address segment and a network platform, a network platform to which the set top box belongs.

Fig. 6 is a structural block diagram (II) of a device for multi-screen control according to an embodiment of the present disclosure. As shown in Fig. 6, the device relates to a determining module 44 in Fig. 4, and the determining module 44 further comprises: a fifth determining unit 447 configured to determine, according to a port receiving the first access request message, a network platform to which the terminal belongs; or a sixth determining unit 448, configured to determine, according to a port receiving the second access request message, a network platform to which the set top box belongs.

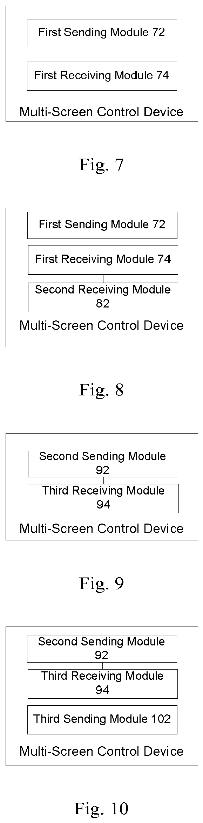

In an alternative embodiment, the network platform is at least one of: an optical transmission technology (OTT) network platform and an interactive personality IPTV network platform. Fig. 7 is a structural block diagram (III) of a device for multi-screen control according to an embodiment of the present disclosure. In an alternative embodiment, the device is applied to a terminal. As shown in Fig. 7, the device comprises: a first sending module 72 configured to send a first access request message to a server; a first receiving module 74 configured to receive, from the server, an internet protocol (IP) address corresponding to the network platform to which the terminal belongs, wherein the network platform is determined by the server according to the first access request message.

Fig. 8 is a structural block diagram (IV) of a device for multi-screen control according to an embodiment of the present disclosure. In addition to all the modules shown in Fig. 7, the device further comprises a second receiving module 82 configured to receive the IP address of a proxy server corresponding to a set top box, wherein the IP address of the proxy server is an IP address corresponding to a designated network platform, and the designated network platform is a network platform to which the terminal and the proxy server belong together.

Fig. 9 is a structural block diagram (V) of a device for multi-screen control according to an embodiment of the present disclosure. As shown in Fig. 9, the device comprises: a second sending module 92 configured to send a second access request message to a server; a third receiving module 94, configured to receive, from the server, an IP address corresponding to a network platform to which the set top box belongs, wherein the network platform is determined by the server according to the second access request message.

Fig. 10 is a structural block diagram (VI) of a device for multi-screen control according to an embodiment of the present disclosure. As shown in Fig. 10, in addition to all the modules shown in Fig. 9, the device further comprises: a third sending module 102 configured to send the IP address of a proxy server corresponding to the set top box to a terminal, wherein the IP address of the proxy server is an IP address corresponding to a designated network platform, and the designated network platform is a network platform to which the terminal and the proxy server belong together.

It should be noted that, each of the foregoing modules may be implemented by software or hardware, and the latter may be implemented in the following manner, but not limited to: the foregoing modules are all located in the same processor; or the foregoing modules are respectively located in multiple processors.

In an embodiment of the present disclosure, there is further provided a storage medium. Alternatively, in the present embodiment, the above-described storage medium may be configured to store program code configured to perform the following steps:
S1: The server receives a first access request message sent by a terminal and receives a second access request message sent by a set top box.
S2: The server determines, according to the first access request message, the network platform to which the terminal belongs, and determines, according to the second access request message, the network platform to which the set top box belongs.
S3: The server sends to the terminal, according to the network platform to which the terminal belongs, an internet protocol (IP) address corresponding to the network platform to which the terminal belongs, and sends to a proxy server corresponding to the set top box, according to the network platform to which the set top box belongs, an IP address corresponding to the network platform to which the set top box belongs.

Alternatively, the storage medium is further configured to store program code configured to perform the following steps:
S4: A terminal sends a first access request message to a server.
S5: The terminal receives from the server an internet protocol (IP) address corresponding to the network platform to which the terminal belongs, wherein the network platform is determined by the server according to the first access request message.

Alternatively, the storage medium is further configured to store program code configured to perform the following steps.

S6: The set top box sends a second access request message to the server.

S7: The set top box receives from the server an IP address corresponding to a network platform to which the set top box belongs, and the network platform is determined by the server according to the second access request message.

Alternatively, in the embodiment, the storage medium may comprise, but not limited to, any medium that may store program code, such as a USB disk, a read-only memory (ROM), a random access memory (RAM), a mobile hard disk, a magnetic disc or an optical disc, etc. Alternatively, in the embodiment, the processor executes S1, S2 and S3 according to the program code stored in the storage medium.

Alternatively, in the embodiment, the processor executes S4 and S5 according to the program code stored in the storage medium.

Alternatively, in the embodiment, the processor executes S6 and S7 according to the program code stored in the storage medium.

Alternatively, for a specific example in the embodiment, reference may be made to the examples described in the foregoing embodiments and alternative embodiments, and details thereof are not described herein again in the embodiment.

With respect to the above-mentioned problems existing in the related art, the description is given below with reference to specific alternative embodiments. The following alternative embodiments are combined with the foregoing alternative embodiments and alternative implementations thereof.

In a typical application scenario of IPTV multi-screen interaction, that is, when there are two network platforms OTT and IPTV, how the terminal and the set top box acquire the IP addresses of the servers that are consistent with their own network platforms so as to ensure the normal network communication between the terminal, the set top box and the server, is the premise of normal multi-screen interaction. In the embodiment, with respect to the problem, there is proposed a solution in which a multi-screen gateway system with a distributed architecture cooperates with a service system to return correct addresses to the terminal and the set top box in the main flow of a multi-screen service so as to ensure that the terminal, the set top box and the server can communicate therebetween. The multi-screen gateway mainly comprises two functional modules: an access module and a proxy module. The functions of these two modules are as follows: an access server is responsible for access load balancing and proxy server allocation of the terminal and the set top box, and a proxy server is responsible for terminal registration reception, message saving, an inquiry of the terminal to the server for a bound set top box list, and message forwarding between the terminal and the set top box.

The system is a distributed system, and there will be more than one proxy server. According to the number of users, it is determined that there is only one access server. The multiple proxy servers are uniformly managed by the access server, and the set top boxes are distributed on the proxy servers for management. After a set top box is powered on, it will go to the access server for access. Since the access server also corresponds to two network platforms, and the different network platforms have corresponding different addresses and detection ports: IMPORT OTT IP, IMPORT OTT PORT, IMPORT IPTV IP, IMPORT IPTV PORT, the set top boxes of different network platforms need to acquire the IP address and port of the corresponding access server so as to interact with the access server normally. The IP address and port of the access server are delivered by the IPTV service system. The IPTV service system configures access server information of the two network platforms, and sends the related information to EPG. After the set top box starts, it first logs into EPG, acquires the IP address and port of the multi-screen access server of the corresponding network platform during the login process. The set top box sends an access message to the corresponding IP address and port. The access server performs load balancing after receiving the access message, and assigns a proxy server to the set top box, while the IP address and port of the assigned proxy server should also be consistent with the set top box's network platform.

The access server itself configures the IP address segments of the terminal and the set top box respectively corresponding to the OTT and IPTV network platforms, and the multi-screen system can determine the network platforms to which the terminal and the set top box belong, according to the IP addresses of the terminal and the set top box as well as the correlation between the IP address segment and the network platform. The proxy server configures its different IP addresses on the two network platforms, OTT and IPTV. When the proxy server is turned on, the two addresses will be reported to the access server. After receiving the reported message, the access server sends the correlation between the network platform configured by itself and the IP address segment to the proxy server. After receiving the access message of the terminal and the set top box and determining the network platforms to which the terminal and the set top box belong, the access server delivers the IP addresses of the proxy server consistent with the network platforms where the terminal and the set top box are located, to the terminal and the set top box, and thus the registration of the terminal and set top box with the proxy server and heartbeat messages will be normally conducted.

When controlling the set top box, the terminal first needs to go to the multi-screen system to inquire the list of the set top boxes bound to the terminal, and then selects one of the set top boxes to control the set top box through the proxy server. The proxy server realizes the message forwarding between the terminal and the set top box. As there possibly are multiple set top boxes bounded to the terminal, and the multiple set top boxes may be distributed among multiple proxy servers, when the terminal wants to control the set top box, it interacts with the proxy server where the set top box is located, so the set top box list returned by the multi-screen system to the terminal carries the IP address information of the proxy server where the set top box is located, and the IP address must be consistent with the network platform where the terminal is located so that the terminal can interact with the proxy server normally. After receiving the request message of the terminal, the multi-screen system acquires the IP address of the terminal, determines, according to the correlation between the configured IP address segment and the network platform, whether the terminal belongs to the OTT network platform or the IPTV network platform. If it belongs to the OTT network platform, the address of the proxy server where the set top box is located on the OTT network platform is returned. Otherwise, the IPTV network platform address is returned.

Provided in an alternative embodiment of the present disclosure is a situation in which a distributed IPTV multi-screen gateway guarantees, in a multi-screen platform case, that a terminal and a set top box can acquire server addresses consistent with their network platforms so as to guarantee the network intercommunications between the terminal, the set top box and the server, and to achieve normal multi-screen interaction.

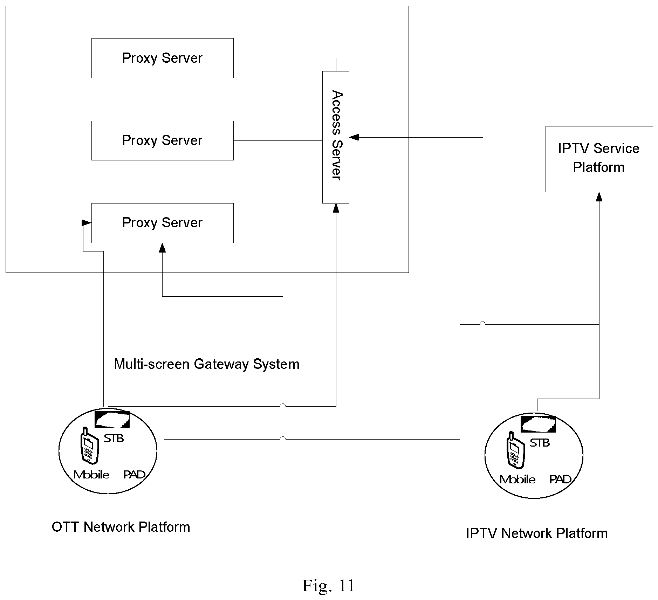

Fig. 11 is a general architecture diagram of a distributed multi-screen gateway according to an embodiment of the present disclosure.

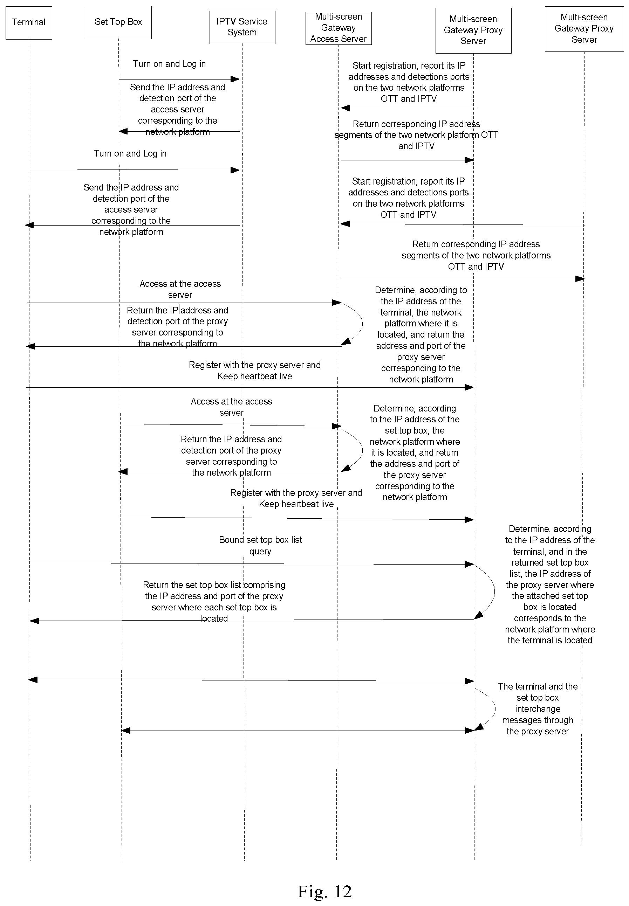

Fig. 12 is a flowchart of interaction between a terminal and a set top box on different network platforms according to an embodiment of the present disclosure.
1. The access server configures the IP address segments corresponding to the OTT and IPTV network platforms and configures its own IP addresses and detection ports corresponding to the two network platforms.
2. The push server configures the IP addresses corresponding to the two network platforms, OTT and IPTV.
3. After the push server is turned on, it reports to the access server its IP addresses on the two network platforms, OTT and IPTV.
4. After receiving the report message from the push server, the access server sends its own configured IP address segments corresponding to OTT and IPTV network platforms to the push server;
5. The IPTV service system configures the IP address and detection port of the access server on the two network platforms, OTT and IPTV, and then sends same to EPG. The OTT EPG corresponds to the address and port of the access server on the OTT network platform, and the IPTV EPG corresponds to the address and port of the access server on the IPTV network platform;
6. The terminal and the set top box log into EPG, the set top box of the OTT network platform logs into OTT EPG, and the set top box of the IPTV network platform logs into IPTV EPG;
7. The terminal and the set top box at two network platforms send an access message, according to the acquired IP address and port of the access server that are consistent with their own network platforms, to the access server;
8. The access server distinguishes message sources by the port, returns a corresponding OTT IP for the message received from the OTT PORT after a push server is selected for load balancing, and returns an IPTV IP for the message acquired from the IPTV PORT;
9. After receiving the returned message for access, the terminal sends registration and heartbeat messages to the IP and PORT of the corresponding push server.
10. The terminal initiates a bound set top box list query to the push server;
11. After the push server acquires the list of set top boxes bound to the terminal from the IPTV service system, it inquires in its own system whether these set top boxes are online according to the IDs of the set top boxes, and then adds, on the basis of the set top box information returned by the service system, the online status of the set top boxes and the IP address of the push server wherein the set top boxes are located, and returns same to the terminal;
12. The push server inquires whether the set top box is online from the information maintained by itself according to the ID of the set top box;
13. The push server determines whether the terminal belongs to the OTT network platform or the IPTV network platform according to the terminal's IP address as well as the correlation between the network platform maintained by itself and the IP address segment, and then adds, in the attachment information, the IP address consistent with the network platforms where the push server and the terminal are located. The terminal selects a set top box for control. Since the terminal and the set top box both acquire the server IP addresses consistent with their own network platforms, the communication with the server will be normal and the multi-screen control will be normal.

To sum up, according to the embodiments of the present disclosure, a server is used to receive a first access request message sent by a terminal and a second access request message sent by a set top box; the server determines, according to the first access request message, a network platform to which the terminal belongs, and determining, according to the second access request message, a network platform to which the set top box belongs; and the server sends to the terminal, according to the network platform to which the terminal belongs, an internet protocol (IP) address corresponding to the network platform to which the terminal belongs, and sends to the proxy server corresponding to the set top box, according to the network platform to which the set top box belongs, the IP address corresponding to the network platform to which the set top box belongs, thereby solving the problem in the related art that multi-screen message interaction cannot be normally conducted, ensuring the network intercommunications between the terminal, the set top box and the server, and achieving normal multi-screen interaction.

Apparently, those skilled in the art should understand that respective modules or steps in the embodiments of the present disclosure may be implemented by general purpose computing devices, and may be centralized on a single computing device or distributed among multiple computing devices. Alternatively, they may be implemented by program code executable by a computing device so that they may be stored in a storage device for execution by the computing device, and in some cases the steps shown or described may be executed in a sequence different than that described herein, or they are made to be individual integrated circuit modules, or a plurality of modules or steps among them are made into a single integrated circuit module. In this way, the embodiments of the present disclosure are not limited to any specific hardware and software combination.

The foregoing descriptions are merely about preferred embodiments of the present disclosure and are not intended to limit the present disclosure. For those skilled in the art, the present disclosure may have various modifications and changes. Any modification, equivalent replacement, improvement, etc. within the spirit and principle of the present disclosure should be comprised in the protection scope of the present disclosure.

### Industrial Applicability

As described above, the method and device for multi-screen control provided in the embodiments of the present disclosure have the following beneficial effects of: solving the problem in the related art that multi-screen message interaction cannot be normally conducted, ensuring the network intercommunications between the terminal, the set top box and the server, and achieving normal multi-screen interaction.

## Claims

1. A method for multi-screen control, comprising:
a server receiving a first access request message sent by a terminal and a second access request message sent by a set top box;
the server determining, according to the first access request message, a network platform to which the terminal belongs, and determining, according to the second access request message, a network platform to which the set top box belongs;
the server sending to the terminal, according to the network platform to which the terminal belongs, an internet protocol (IP) address corresponding to the network platform to which the terminal belongs, and sending to a proxy server corresponding to the set top box, according to the network platform to which the set top box belongs, an IP address corresponding to the network platform to which the set top box belongs.

2. The method according to claim 1, wherein, the server determining, according to the first access request message, a network platform to which the terminal belongs, and determining, according to the second access request message, a network platform to which the set top box belongs, comprises:
the server acquiring the IP address of the terminal itself; determining a first IP address segment of the IP address of the terminal itself, wherein the first IP address segment is an IP address segment that is pre-configured by the server for the terminal; according to the correlation between the pre-configured first IP address segment and a network platform, determining a network platform to which the terminal belongs; or
the server acquiring the IP address of the set top box itself; and determining a second IP address segment of the IP address of the set top box itself, wherein the second IP address segment is an IP address segment pre-configured by the server for the set top box; and according to the correlation between the pre-configured second IP address segment and a network platform, determining a network platform to which the set top box belongs.

3. The method according to claim 1, wherein, the server determining, according to the first access request message, a network platform to which the terminal belongs, and determining, according to the second access request message, a network platform to which the set top box belongs, comprises:
the server determining a network platform to which the terminal belongs according to the port receiving the first access request message; or
the server determining a network platform to which the set top box belongs according to the port receiving the second access request message.

4. The method according to claim 1, wherein, the network platform is at least one of: an optical transmission technology (OTT) network platform and an interactive personality TV (IPTV) network platform.

5. A method for multi-screen control, comprising:
a terminal sending a first access request message to a server;
the terminal receiving, from the server, an internet protocol (IP) address corresponding to a network platform to which the terminal belongs, wherein the network platform is determined by the server according to the first access request message.

6. The method according to claim 5, wherein, the method further comprises:
the terminal receiving the IP address of a proxy server corresponding to a set top box, wherein the IP address of the proxy server is an IP address corresponding to a designated network platform, and the designated network platform is a network platform to which the terminal and the proxy server belong together.

7. A method for multi-screen control, comprising:
a set top box sending a second access request message to a server;
the set top box receiving, from the server, an IP address corresponding to a network platform to which the set top box belongs, wherein the network platform is determined by the server according to the second access request message.

8. The method according to claim 7, wherein, the method further comprises:
the set top box sending the IP address of a proxy server corresponding to the set top box to a terminal, wherein the IP address of the proxy server is an IP address corresponding to a designated network platform, and the designated network platform is a network platform to which the terminal and the proxy server belong together.

9. A device for multi-screen control, applied to a server, comprising:
a receiving module, configured to receive a first access request message sent by a terminal and receive a second access request message sent by a set top box;
a determining module, configured to determine, according to the first access request message, a network platform to which the terminal belongs, and determine, according to the second access request message, a network platform to which the set top box belongs;
a sending module, configured to send to the terminal, according to the network platform to which the terminal belongs, an internet protocol (IP) address corresponding to the network platform to which the terminal belongs, and send to the proxy server corresponding to the set top box, according to a network platform to which the set top box belongs, an IP address corresponding to the network platform to which the set top box belongs.

10. The device according to claim 9, wherein, the determining module comprises:
a first acquisition unit, configured to acquire the IP address of the terminal itself; a first determining unit, configured to determine a first IP address segment of the IP address of the terminal itself, wherein the first IP address segment is an IP address segment pre-configured by the server for the terminal; a second determining unit, configured to determine, according to the correlation between the pre-configured first IP address segment and a network platform, a network platform to which the terminal belongs; or
a second acquisition unit, configured to acquire the IP address of the set top box itself; a third determining unit, configured to determine a second IP address segment of the IP address of the set top box itself, wherein the second IP address segment is an IP address segment pre-configured by the server for the set top box; and a fourth determining unit, configured to determine, according to the correlation between the pre-configured second IP address segment and a network platform, a network platform to which the set top box belongs.

11. The device according to claim 9, wherein, the determining module comprises:
a fifth determining unit, configured to determine, according to a port receiving the first access request message, a network platform to which the terminal belongs; or
a sixth determining unit, configured to determine, according to a port receiving the second access request message, a network platform to which the set top box belongs.

12. The device according to claim 9, wherein, the network platform is at least one of: an optical transmission technology (OTT) network platform and an interactive personality IPTV network platform.

13. A device for multi-screen control, applied to a server, comprising:
a first sending module, configured to send a first access request message to a server;
a first receiving module, configured to receive, from the server, an internet protocol (IP) address corresponding to the network platform to which the terminal belongs, wherein the network platform is acquired by the server according to the first access request message.

14. The device according to claim 13, wherein, the device further comprises:
a second receiving module, configured to receive the IP address of a proxy server corresponding to a set top box, wherein the IP address of the proxy server is an IP address corresponding to a designated network platform, and the designated network platform is a network platform to which the terminal and the proxy server belong together.

15. A device for multi-screen control, applied to a set top box, comprising:
a second sending module, configured to send a second access request message to a server;
a third receiving module, configured to receive, from the server, an IP address corresponding to a network platform to which the set top box belongs, wherein the network platform is determined by the server according to the second access request message.

16. The device according to claim 15, wherein, the device further comprises:
a third sending module, configured to send the IP address of a proxy server corresponding to the set top box to a terminal, wherein the IP address of the proxy server is an IP address corresponding to a designated network platform, and the designated network platform is a network platform to which the terminal and the proxy server belong together.
